# EUROPÄISCHE PATENTSCHRIFT

(11) **EP 1 967 101 B1**
(45) Veröffentlichungstag und Bekanntmachung des Hinweises auf die Patenterteilung: **16.02.2011**
(21) Anmeldenummer: 07024540.2
(22) Anmeldetag: 18.12.2007
(51) Int. Cl.: A47J 31/54, A47J 31/44

(54) **Heißwassereinheit für einen Heißgetränkezubereiter mit Milchschäumer**
Hot water unit for a hot drink machine with milk foamer
Unité d'eau chaude pour un dispositif de préparation de boissons chaudes doté d'un dispositif de préparation de mousse de lait

(30) Priorität: 06.03.2007 DE 102007010901
(43) Veröffentlichungstag der Anmeldung: 10.09.2008
(73) Patentinhaber: PAV PATENTVERWERTUNG KG, 83395 Freilassing (DE)
(72) Erfinder:
(74) Vertreter: Grünecker, Kinkeldey, Stockmair & Schwanhäusser Anwaltssozietät

(56) Entgegenhaltungen:
- DE-A1- 3 521 989
- FR-A- 2 220 220
- US-A- 5 490 447

## Beschreibung

Die vorliegende Erfindung betrifft eine Heißwassereinheit für einen Heißgetränkezubereiter, insbesondere eine Kaffeemaschine mit einem Milchschäumer, mit einem Boiler zum Bereitstellen von Brühwasser, der Boiler weist einen Boilerzulauf, eine Boiler-Heizeinrichtung und einen Brühwasserablauf auf, und mit einem Verdampfer zum Bereitstellen von Dampf, der Verdampfer weist einen Verdampferzulauf, eine Verdampfer-Heizeinrichtung und einen Dampfauslass auf. Darüber hinaus bezieht sich die Erfindung auf die Verwendung einer derartigen Heißwassereinheit zum Anschluss an einen Milchschäumer und auf einen Heißgetränkezubereiter mit einer solchen Heißwassereinheit und einem Milchschäumer.

Herkömmliche Heißgetränkezubereiter sind mit sehr unterschiedlichen Vorrichtungen zum Bereitstellen von Brühwasser und/oder Wasserdampf ausgeführt. Neben einfachen Durchlauferhitzern, die nur einen relativ geringen Volumenstrom an Brühwasser bereitstellen, werden insbesondere bei hochwertigeren Heißgetränkezubereitern Boiler eingesetzt, in denen eine größere Menge Brühwasser auf eine gewünschte Brühtemperatur erwärmt wird. Bei solchen Boilern wird üblicherweise Wasser aus einem Kaltwasserreservoir mittels einer Pumpe über einen im unteren Bereich des Boilers angeordneten Zulauf dem Boiler zugeführt und dadurch erwärmtes Brühwasser aus einem im oberen Bereich des Boilers angeordneten Brühwasserablauf aus dem Boiler herausgedrückt. Bei einer Kaffeemaschine gelangt das erwärmte Brühwasser aus dem Brühwasserablauf des Boilers zu einer Filterkammer und von dort in eine Tasse oder Kanne.

Die DE 24 05 656 C3 beschreibt beispielsweise einen derartigen Boiler zur Brühwasserbereitung in einfachen Kaffeemaschinen, bei dem das Wasser seitlich in der Mitte des Boilers zugeführt wird. Dabei sind die Heizwendeln der Heizvorrichtung im unteren Bereich des Boilers angeordnet und das Brühwasser wird über ein Fallrohr aus dem oberen Bereich des Boilers abgeführt. Ein weiterer Boiler ist aus der DE 202 18 338 U1 bekannt. Bei diesem Boiler wird das Wasser kurz über dem Boden radial in den Boiler eingeführt, wobei eine Durchmischung des im oberen Teil des Boilers befindlichen aufgeheizten Brühwassers mit dem zugeführten Kaltwasser durch verschiedene Strömungseinrichtungen vermindert wird. Ein weiterer Boiler ist aus der FR 2220220 A bekannt.

Eine Weiterentwicklung dieser einfachen Boiler-Technologie ist in der US 4,565,121 offenbart. Mit diesem Boiler kann nicht nur Brühwasser (bei 92°C bis 94°C) zur Zubereitung von Heißgetränken erzeugt werden, sondern auch Wasserdampf (bei 110°C bis 120°C und 1 bis 2 bar) um Milch aufzuschäumen. Dabei wird das Brühwasser aus der Mitte des Boilers oberhalb der Heizwendeln der Heizeinrichtung abgeführt, während Wasserdampf am Deckel des Boilers herausgeleitet wird. Zur Erzeugung von Wasserdampf muss der Brühwasserablauf mittels eines Ventils geschlossen und über die Heizeinrichtung das Boilerwasser bis zum Sieden erhitzt werden, um ausreichend überhitzten Wasserdampf bereitzustellen. Da für die Herstellung von Wasserdampf der gesamte Boilerinhalt unter Druck bis zur entsprechenden Siedetemperatur aufgeheizt werden muss, wird zum Einen unnötig viel Energie aufgewendet und zum Anderen eine längere Zeitspanne benötigt, bis tatsächlich Wasserdampf aus dem Boiler entnommen werden kann. Darüber hinaus ist die nach einer Dampfentnahme im Boiler vorliegende Brühwassertemperatur viel zu hoch für die Zubereitung von Kaffee, so dass nach einer Dampfentnahme bzw. dem Aufschäumen von Milch eine Abkühlpause oder ein zusätzlicher Spülvorgang eingefügt werden muss, um die benötigte niedrigere Brühwassertemperatur wieder herzustellen.

Komfortable Heißgetränkezubereiter besitzen dagegen üblicherweise einen Boiler für die Bereitstellung von Brühwasser und einen separaten Verdampfer zum Bereitstellen von Dampf. Einen derartigen Heißgetränkezubereiter mit einer gattungsgemäßen Heißwassereinheit wird in der US 5,490,447 beschrieben. Da die Heißwassereinheit sowohl einen Boiler als auch einen separaten Verdampfer besitzt, können unabhängig voneinander in beliebiger Reihenfolge Brühwasser und Wasserdampf entnommen werden, bzw. Kaffee aufgebrüht und Milch aufgeschäumt werden. Zwar ermöglicht eine solche Heißwassereinheit einen hohen Komfort für den Nutzer, jedoch sind nicht nur zwei separate Wassererhitzer, sondern auch alle zugehörigen Heizeinrichtungen, Sicherheitstechnik, sowie Verbindungsleitungen und Anschlüsse in doppelter Ausführung notwendig. Dadurch entstehen gegenüber einfachen Boilersystemen deutlich höhere Material- und Montagekosten, was sich in einem hohen Produktpreis niederschlägt, der sich nur in einem kleinen Marktsegment durchsetzen lässt.

Die Aufgabe der vorliegenden Erfindung ist daher, eine Heißwassereinheit für einen Heißgetränkezubereiter bereitzustellen, die bei möglichst kostengünstiger Herstellung einen hohen Komfort für den Nutzer ermöglicht, d.h. eine Heißwassereinheit, die Brühwasser und Wasserdampf in beliebiger Reihenfolge möglichst ohne lange Wartezeiten und unbeschränkt oft aufeinander folgend bereitstellt.

Diese Aufgabe wird erfindungsgemäß durch eine Heißwassereinheit gemäß Anspruch 1 gelöst. Dabei sind der Boiler und der Verdampfer seriell angeordnet , wobei der Verdampferzulauf als Brühwasserzulauf ausgebildet ist und an den Brühwasserablauf des Boilers angeschlossen ist. Durch diese Konstruktion der Heißwassereinheit ist in dem Boiler nach einer Inbetriebnahme des Heißgetränkezubereiters immer Brühwasser mit der richtigen Brühwassertemperatur, üblicherweise 92°C bis 94°C vorhanden, um jederzeit Brühwasser zum Aufbrühen von Kaffee oder anderen Heißgetränken bereitzustellen. Um mit der erfindungsgemäßen Heißwassereinheit Wasserdampf bereitzustellen, wird der Verdampfer kurz aufgeheizt und nach kurzer Wartezeit wird dem Verdampfer aus dem Boiler Brühwasser zugeführt und verdampft. Da der Verdampfer hier die zur Dampfbereitung benötigte Wassermenge lediglich von der relativ hohen Brühwassertemperatur auf die benötigte Dampftemperatur, 110°C bis 120°C bei 1 bis 2 bar, aufheizen und verdampfen muss, kann bereits nach sehr kurzer Wartezeit ausreichend Dampf bei der geforderten Dampftemperatur bereitgestellt werden. Da dabei die Temperatur des Brühwassers im Boiler nicht oder nur unwesentlich beeinflusst wird, kann direkt nach einer Dampfentnahme der Heißwassereinheit auch Brühwasser entnommen werden, was beispielsweise für die Zubereitung von Latte Macciato oder anderen Kaffeespezialitäten sehr vorteilhaft ist. Im Gegensatz zu herkömmlichen Ein-Boiler-Systemen ermöglicht die erfindungsgemäße Heißwassereinheit einen erheblichen Komfortgewinn, wobei nicht nur lästige Wartezeiten entfallen, sondern auch die Temperatur des Brühwassers und insbesondere des Wasserdampfs besser auf den gewünschten Temperaturlevels gehalten werden, so dass auch die mit dem Heißgetränkezubereiter hergestellten Heißgetränke eine höhere Qualität aufweisen. Im Vergleich zu aufwändigen Systemen kann die erfindungsgemäße Heißwassereinheit zwar nur bei der Wartezeit zum Aufheizen des Verdampfers eine geringe Komfortverbesserung erreichen, jedoch reduziert sich der konstruktive Aufwand und der Materialeinsatz erheblich ohne Einbußen an Komfort.

Für eine einfache preisgünstige Konstruktion kann der Boiler ein Boiler-Gehäuse aufweisen, wobei der Boilerzulauf im unteren Bereich des Gehäuses und der Brühwasserablauf im oberen Bereich des Gehäuses angeordnet sind. Derartige Boiler werden bereits in großem Umfang in Heißgetränkezubereitern eingesetzt und können daher mit geringen Produktkosten als Standardteil beschafft werden. Dabei kann die Boiler-Heizeinrichtung als mehrstufige Heizwendel ausgebildet sein, die im Inneren des Boiler-Gehäuses angeordnet ist. Mehrstufige Heizwendeln sind kostengünstig und als Wärmeübertrager im Inneren des Boiler-Gehäuses mit einem sehr hohen Wirkungsgrad einsetzbar.

Erfindungsgemäß ist der Verdampfer als Durchlauferhitzer ausgebildet ist und zwischen dem Brühwasserzulauf und dem Dampfauslass ein Dampfrohr aufweist. Ein solcher Durchlauferhitzer kann nach einer kurzen Aufheizphase aus dem erwärmten Brühwasser in einer ausreichenden Menge überhitzten Wasserdampf bereitstellen, in dem das Brühwasser im Dampfrohr zunächst erhitzt, dann verdampft und der Dampf schließlich überhitzt wird. Der Durchlauferhitzer ermöglicht so das Herstellen von Wasserdampf in der geforderten Qualität. Günstigerweise ist dabei der Heizkörper der Verdampfer-Heizeinrichtung parallel zu dem Dampfrohr angeordnet, um eine sichere Wärmeübertragung entlang des gesamten Dampfrohres bei nur geringen Wärmeleitungsverlusten zu realisieren.

Erfindungsgemäß ist das Dampfrohr geneigt gegenüber einer horizontalen Aufstellungsebene des Heißgetränkezubereiters angeordnet und der Brühwasserzulauf sowie der Dampfauslass an der bezogen auf die Aufstellungsebene tiefsten Stelle der zugehörigen Dampfrohr-Abschnitte des Verdampfers angeordnet sind. Die Neigung des Dampfrohres ermöglicht einen sicheren Ablauf des im Verdampfer nach einer Dampfentnahme in den den Brühwasserzulauf und den Dampfauslass ausschließenden Abschnitten des Dampfrohrs zurückbleibenden Restwasser oder des nach einer vorhergehenden Abkühlung entstehenden Kondensats, so dass nach der Beendigung einer Dampfentnahme oder beim Aufheizen des Verdampfers ein im Wesentlichen trockenes Dampfrohr vorliegt. Ein trockenes Dampfrohr verhindert ein unkontrolliertes Verdampfen von Kondensat oder Restwasser und ein damit verbundenen Ausströmen oder Spucken von Dampf oder heißem Wasser aus einem Überlauf bzw. dem Dampfaustritt des Heißgetränkezubereiters. Ein unkontrolliertes Austreten von Dampf oder heißem Wasser führt nicht nur zu einer negativen Bewertung durch den Anwender, sondern birgt auch eine Verletzungsgefahr für den Nutzer. Durch die geneigte Anordnung des Dampfrohres bzw. der jeweils zugehörigen Dampfrohr-Abschnitte, wobei hier die Neigung der Ebene der Dampfrohre in ihrer Gesamtheit zu der horizontalen Aufstellungsebene des Heißgetränkezubereiters gemeint ist und im Wesentlichen keine Stellen des Dampfrohres nicht geneigt sind oder zumindest nur horizontal verlaufen, kann ein sonst notwendiges zusätzliches Ventil zum Absperren des Dampfauslasses vermieden werden. Bei herkömmlichen Systemen ist ein solches Ventil notwenidg, um aus sicherheitstechnischen Aspekten beim Aufheizen des Verdampfers kein heißes Wasser oder Dampf unkontrolliert aus dem Dampfaustritt an dem Heißgetränkezubereiter austreten zu lassen.

Die Neigung eines als Durchlauferhitzer ausgebildeten Verdampfers zum Bereitstellen von Wasserdampf sichert einen sicheren Ablauf des entstehenden Kondensats und im Dampfrohr verbleibenden Restwassers, so dass bei einem erneuten Aufheizen der Verdampfer-Heizeinrichtung kein heißes Wasser oder Dampf unkontrolliert aus dem Dampfaustritt des Heißgetränkezubereiters austritt oder ein zusätzliches Absperrventil mit einer Ablaufvorrichtung für einen eigenständigen Verdampfer erforderlich ist.

Für einen möglichst sicheren Ablauf des Kondensats oder Restwasser aus dem Dampfrohr kann die Neigung gegenüber der horizontalen Aufstellungsebene größer als 5°, bevorzugt größer als 10° sein. Um dabei auch einen platzsparenden Einbau des Verdampfers in dem Heißgetränkezubereiter zu ermöglichen, kann die Neigung gegenüber der horizontalen Aufstellungsebene maximal 90°, aber bevorzugt kleiner als 30°, sein. Entscheidend ist dabei, dass sich sowohl Brühwassereinlass und Dampfauslass an der jeweils niedrigsten Position der zugehörigen Dampfrohr-Abschnitte des Verdampfers befinden.

Eine zweckmäßige Ausgestaltung sieht vor, dass der Brühwasserzulauf und der Dampfauslass des Durchlauferhitzers auf der gleichen Seite des Durchlauferhitzers angeordnet sind. Die Anordnung des Brühwasserzulaufs und des Dampfauslasses auf der gleichen Seite des Durchlauferhitzers, d.h. die Anschlüsse des Brühwasserzulaufs und des Dampfauslasses sind nah beieinander positioniert und parallel zueinander oder in einem Winkel kleiner als 90° an dem Verdampfer angeordnet. Durch diese Anordnung wird in dem Heißgetränkezubereiter nur auf einer Seite des Durchlauferhitzers ein Anschluss-Bauraum benötigt. Ebenso ist diese Konstruktion montagefreundlich und damit kostensparend. Bei einer geneigten Anordnung des Dampfrohres sind der Brühwasserzulauf und der Dampfauslass an einer gegenüber der horizontalen Aufstellungsebene unten liegenden Seite des Durchlauferhitzers angeordnet, so dass sich unabhängig von der Form des Dampfrohres der Brühwasserzulauf und der Dampfauslass an der tiefsten Stelle des Dampfrohres befinden. Dabei kann das Dampfrohr in einfachster Weise U-förmig ausgebildet sein. Die U-förmige Ausbildung des Dampfrohres ist nicht nur leicht herstellbar, sondern ermöglicht auch in simpler Weise die Anordnung des Brühwasserzulaufs und des Dampfauslasses auf der gleichen Seite und verhindert eine gegenseitige Störung des Brühwasserzulaufs und des Dampfauslasses bzw. von deren Anschlüssen und Leitungen. Alternativ kann das Dampfrohr als Kreisbogen von über 180° ausgebildet sein, bevorzugt in einer annährend geschlossenen oder vollständig geschlossenen Form. Ein kreisbogenförmiges Dampfrohr erstreckt sich im Vergleich zu einem U-förmigen Dampfrohr bei gleicher Grundfläche auch über den Bereich der offenen Seite, so dass sich insgesamt die Länge der Heizwendel vergrößern lässt, wodurch sich bei gleicher Heizleistung die Oberflächenbelastung des Heizkörpers verringern lässt.

Eine weitere Ausbildung sieht vor, dass zwischen dem Brühwasserablauf und dem Brühwasserzulauf eine Brühwasserleitung vorgesehen ist, und die Brühwasserleitung als flexibler, temperaturbeständiger Schlauch ausgebildet ist. Der Einsatz eines Schlauchs ermöglicht konstruktiv einfache und montagefreundliche Lösungen, da sich eine als Schlauch ausgebildete Brühwasserleitung flexibel zwischen dem Brühwasserablauf und dem Brühwasserzulauf verlegen lässt und eine starre Verbindung der Komponenten vermeidet.

Die vorliegende Erfindung erstreckt sich weiter auf die Verwendung einer der oben beschriebenen Heißwassereinheiten zum Anschluss an einen Milchschäumer, wobei der Dampfauslass der Heißwassereinheit, d. h. des Verdampfers, mittels einer absperrfreien Dampfleitung an dem Milchschäumer angeschlossen wird. Die signifikant kleinere Dimensionierung des seriell mit dem Boiler verbundenen Verdampfers verringert ein Auftreten von Kondensat oder Restwasser in den Verdampfer, wobei eine geneigte Anordnung eines entsprechenden Dampfrohres dies sogar vollständig verhindern kann. So kann beim Aufheizen des Verdampfers kein heißes Wasser oder Wasserdampf aus dem Dampfauslass des Verdampfers bzw. aus dem über eine absperrfreie Dampfleitung angeschlossenen Milchschäumer austreten. Dadurch lässt sich ein ansonsten notwendiges zusätzliches Absperrventil zwischen Dampfauslass und Milchschäumer, bzw. Dampfanschluss des Milchschäumers vermeiden, so dass eine absperrfreie und damit ständig offene Dampfleitung zwischen Dampfauslass und den unabgesperrten Milchschäumer möglich ist. Neben der Einsparung eines Absperrventils kann die Dampfleitung auch als flexibler und temperaturbeständiger Schlauch ausgebildet sein und so eine flexible, montagefreundliche Verlegung der Dampfleitung ermöglichen.

Weiter betrifft die Erfindung einen Heißgetränkezubereiter, insbesondere eine Kaffeemaschine, mit einem Milchschäumer und einer der oben beschriebenen Heißwassereinheiten, wobei der Milchschäumer absperrfrei mit dem Verdampfer der Heißwassereinheit verbunden ist. Neben den bereits beschriebenen funktionellen und konstruktiven Vorteilen einer erfindungsgemäßen Heißwassereinheit bzw. der Verwendung einer Heißwassereinheit zum Anschluss an einen Milchschäumer ist ein entsprechend ausgestalteter Heißgetränkezubereiter durch die einfach gehaltene Konstruktion kostengünstig und darüber hinaus benutzerfreundlich, da das Brühen von Kaffee oder Zubereiten von anderen Heißgetränken und das Aufschäumen von Milch unabhängig von der Reihenfolge beliebig oft aufeinander folgend und ohne lange Wartezeiten möglich ist. Hierbei ist der Milchschäumer absperrfrei, d.h. ohne ein zusätzliches Absperrventil, das den Dampfauslass oder den Zulauf zum Milchschäumer absperrt, mit dem Verdampfer der Heißwassereinheit verbunden. Dadurch ist der Milchschäumer immer offen. Zum Betrieb des Milchschäumers wird der Verdampfer zunächst auf Betriebstemperatur aufgeheizt und anschließend Brühwasser aus dem Boiler in den Verdampfer gefördert, in dem es verdampft und dann dem stets offenen Milchschäumer zugeführt wird. Dabei kann für die Versorgung des Verdampfers mit Brühwasser eine Pumpe vorgesehen sein, die Brühwasser aus dem Boiler in den Verdampfer fördert. Die Pumpe wird nach dem Aufheizen des Verdampfers durch ein vom Anwender gegebenes Signal in Betrieb gesetzt und fördert im Taktbetrieb oder mit sehr kleinem Volumenstrom die zur Dampferzeugung benötigten geringen Brühwassermengen in den Verdampfer. Bei einer geneigten Anordnung des Dampfrohres im Verdampfer ist stets eine Pumpe erforderlich, um das Brühwasser gegen die wirkende Schwerkraft in den Verdampfer zu fördern. Damit das sich beim Aufheizen des Boilers vergrößernde Wasservolumen nicht in den Verdampfer gelangt, muss im Boiler oder zwischen Boiler und Verdampfer eine Überlaufeinrichtung vorgesehen sein, die das zusätzliche Wasservolumen als Überlaufwasser in einen Frischwassertank zurückleitet oder einem Abfluss zuführt. Ohne eine Überlaufeinrichtung könnte das vergrößerte Wasservolumen in den Verdampfer gelangen und zu einem unkontrollierten Austritt von heißem Wasser oder Wasserdampf aus dem Milchschäumer führen, was aus Sicherheitsgründen unbedingt zu vermeiden ist.

In den beigefügten Zeichnungen wird ein Ausführungsbeispiel der vorliegenden Erfindung dargestellt und im folgenden näher erläutert. Es zeigen:
- Fig. 1: eine perspektivische Ansicht einer erfindungsgemäßen Heißwassereinheit mit einem daran angeschlossenen Milchschäumer; und
- Fig. 2: eine Seitenansicht der Heißwassereinheit aus Fig. 1 mit einem Montagerahmen.

Die in den Zeichnungen dargestellte Heißwassereinheit ist das Kernstück eines Heißgetränkezubereiters, insbesondere für eine Kaffeemaschine. Diese Heißwassereinheit besteht im Wesentlichen aus einem Boiler 1 und einem Verdampfer 2, wobei der Verdampfer 2 an einen Milchschäumer 3 angeschlossen ist. Der Boiler 1 besitzt ein Gehäuse 4, üblicherweise aus Blech gefertigt, mit einem im unteren Gehäuseteil angeordneten Kaltwasserzulauf 5 und einem im oberen Gehäuseteil vorstehenden Ablauf 6. Das untere und obere Gehäuseteil sind in der Mitte durch einen Flansch 7 miteinander verbunden, insbesondere durch Schweißen oder Bördeln. Der Flansch 7 dient weiter dazu, den Boiler 1 in seiner Position im Heißgetränkezubereiter zu fixieren. Das Gehäuse 4 des Boilers 1 ist im Wesentlichen zylindrisch ausgebildet und mit seiner Rotationsachse stehend ausgerichtet, wobei eine Winkelabweichung der Rotationsachse zur Senkrechten von bis zu 20° ohne funktionelle Probleme möglich ist, um den Boiler 1 in dem Getränkezubereiter freier positionieren zu können. Der Kaltwasserzulauf 5 und der Brühwasserablauf 6 sind am Boden bzw. an dem Deckel des Boilers 1 angeordnet und koaxial mit der Rotationsachse des Gehäuses 4 ausgerichtet. Am Boden sind neben dem Kaltwasserzulauf 5 auch Anschlüsse 8 für eine im Gehäuse 4 angeordnete Heizwendel (nicht gezeigt) vorgesehen. Weiter ist unterhalb des Flansches 7 ein Temperatursensor 9 vorgesehen, der in einer Sensoraufnahme 10 aufgenommen ist, die im Gehäuse 4 fest verankert ist. Der Temperatursensor 9 erstreckt sich durch einen Durchbruch im Gehäuse 4 in das im Boiler 1 befindliche Brühwasser hinein und ist üblicherweise mittels eines O-Rings gegenüber der Sensoraufnahme 10 abgedichtet. Unterhalb des Temperatursensors 9 und versetzt entlang des Umfangs des Boilers 1 sind zwei unabhängig voneinander wirkende Schutztemperaturbegrenzer 11 vorgesehen, der auf der Höhe der innen liegenden Heizwendel angeordnet sind. Sobald die Wandtemperatur des Boilers 1 über ein bestimmtes Temperaturniveau steigt, unterbricht ein oder beide Schutztemperaturbegrenzer 11 die Stromaufnahme der Boiler-Heizeinrichtung. Im oberen Teil des Gehäuses 4 sind neben dem Brühwasserablauf 6 keine weiteren Anschlüsse oder Funktionselemente vorgesehen.

Der Brühwasserablauf 6 des Boilers 1 ist über die Brühwasserleitung 12, die hier als flexibler und temperaturbeständiger Schlauch ausgebildet ist, mit dem Verdampferzulauf 13 Brühwasserzulauf des Verdampfers 2 verbunden. Darüber hinaus ist der Brühwasserablauf 6 auch mit entsprechenden Zubereitungseinrichtungen für Kaffee oder Heißgetränke (nicht dargestellt) sowie einem Rücklauf in den Frischwassertank (jeweils nicht dargestellt) verbunden. Der Verdampferzulauf 13 mündet in ein U-förmiges Dampfrohr 14, das sich im Verdampfer 2 in einem Bogen bis zum Dampfauslass 15 erstreckt. Auf der Innenseite des U-förmigen Dampfrohrs 14 ist in Kontakt zum Dampfrohr 14 ein Heizelement 16 angeordnet. Das Heizelement 16 erstreckt sich parallel zum Dampfrohr 14 über dessen gesamte Länge und ist gemeinsam mit dem Dampfrohr 14 in einem Verdampfergehäuse 17 eingebettet. An den aus dem Verdampfergehäuse 17 vorstehenden Enden des Heizelements 16 sind Anschlüsse 18 zum Anschluss des Heizelements 16 an eine Spannungsquelle vorgesehen. Auf der Oberseite des Verdampfergehäuses 17 ist ein Temperatursensor 19 angeordnet, der die Temperatur des Dampfrohres 14 erfasst und eine effektive Regelung des Heizelements 16 ermöglicht.

An dem Dampfauslass 15 des Verdampfers 2 schließt sich eine Dampfleitung 20 an, hier wiederum als flexibler und temperaturbeständiger Schlauch ausgebildet, die den Verdampfer 2 mit dem Milchschäumer 3 verbindet. Die Dampfleitung 20 mündet direkt in dem Dampfanschluss 21 des Milchschäumers. Der Milchschäumer 3 besitzt weiter ein seitlich angeordneten Milchanschlussstutzen 22 sowie eine Düse 23 für den Austritt des Milchschaums.

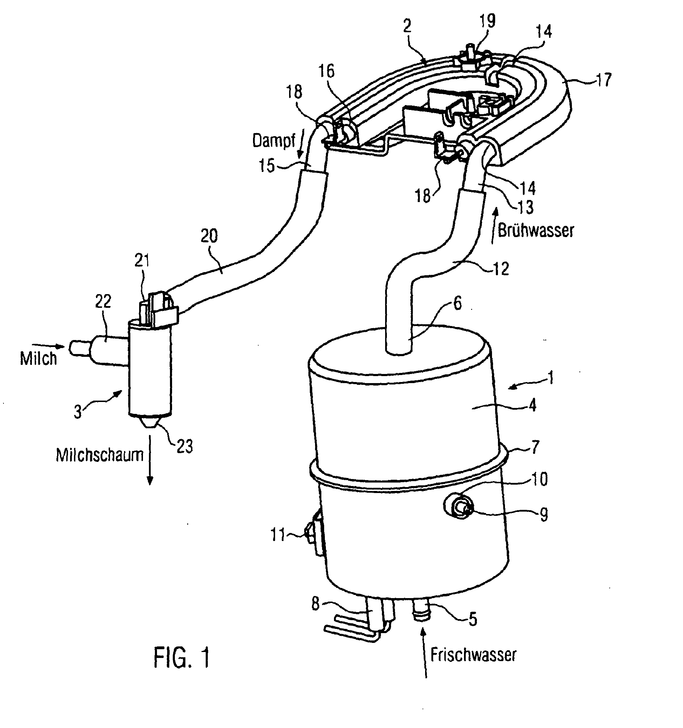

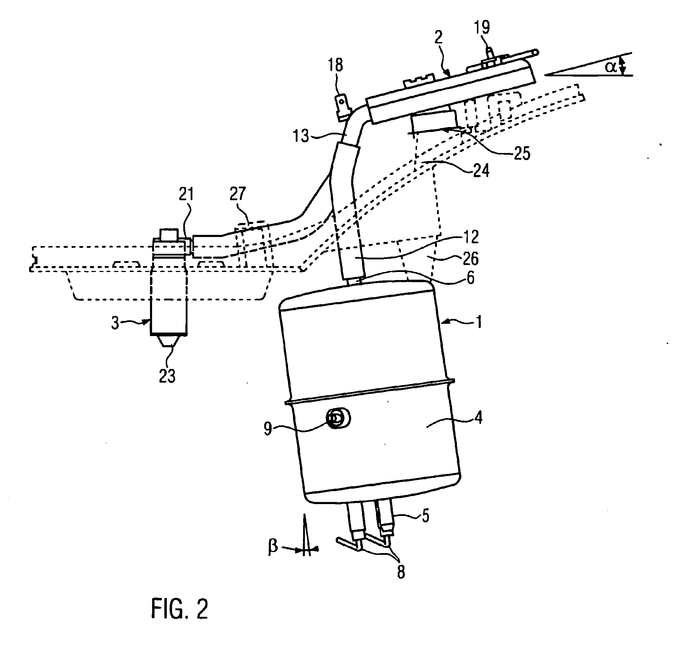

Fig. 2 zeigt eine Seitenansicht der erfindungsgemäßen Heißwassereinheit aus Fig. 1 wiederum mit dem angeschlossenen Milchschäumer 3 und darüber hinaus mit einem Montagerahmen 24 an dem der Boiler 1, der Verdampfer 2 und der Milchschäumer 3 montiert sind. Der Rahmen 24 ermöglicht sowohl die Fixierung des Verdampfers 2 über einen entsprechenden Halter 25 als auch die Anordnung des Boilers 1 über einen Arm 26 und des Milchschäumers 3 in dem Rahmen 24 selbst. Darüber hinaus bietet der Rahmen 24 auch Möglichkeiten, die Brühwasserleitung 12 und die Dampfleitung 20 durch entsprechende Klemmen 27 zu fixieren und gegebenenfalls eine Brühvorrichtung (nicht gezeigt) aufzunehmen, beispielsweise neben dem Milchschäumer 3.

Der Verdampfer 2 ist gegenüber einer horizontalen Aufstellungsebene, die der Ausrichtung des vorderen, den Milchschäumer 3 aufnehmenden Teils des Rahmens 24 entspricht, um einen Winkel α von etwa 13° geneigt. Dabei sind sowohl der Brühwasserzulauf 13 als auch der Dampfauslass 15 des Verdampfers 2 an der tiefsten Stelle des Dampfrohrs 14 angeordnet, um ein Ablaufen von Restwasser und Kondensat aus dem Dampfrohr 14 sicherzustellen. Darüber hinaus ist auch der Boiler 1 in seiner Rotationsachse um einen Winkel β von etwa 9° gegenüber einer senkrechten Achse des Getränkezubereiters geneigt. Dabei wird durch den gewölbten Deckel des Boilers 1 weiterhin sichergestellt, dass sich kein unerwünschtes Luftpolster im Boiler 1 aufbaut.

Im Folgenden wird die Funktionsweise der Heißwassereinheit aus Boiler 1 und Verdampfer 2 anhand der Fig. 1 näher erläutert. Über den Kaltwasserzulauf 5 des Boilers 1 wird mittels einer Pumpe (nicht gezeigt) dem Boiler 1 aus einem Reservoir (nicht gezeigt) Frischwasser zugeführt, das üblicherweise mittels einer Strömungsverteilungseinrichtung (nicht gezeigt) in dem unteren Teil des Boilers 1 verteilt wird. Das in den Boiler 1 eintretende Frischwasser strömt an der bevorzugt mehrstufig ausgebildeten Heizwendel vorbei und steigt erwärmt in den oberen Teil des Boilers 1. Das auf Brühtemperatur erwärmte Brühwasser im oberen Teil des Boilers 1 wird durch das in den unteren Teil des Boilers 1 nachströmende Frischwasser aus dem Brühwasserablauf 6 herausgedrückt.

Der Temperatursensor 9 erstreckt sich durch die Sensoraufnahme 10 in den Boiler 1 hinein, um durch den direkten Kontakt mit dem Brühwasser dessen Temperatur zu bestimmen und ein entsprechendes Signal an eine Reglungseinrichtung der Boiler-Heizeinrichtung weiterzuleiten. Dabei ist der Sensor 9 oberhalb der letzten Windung der Heizwendel angeordnet, um eine von der Beheizung des Wassers durch die Heizwendel nur geringfügig beeinflusste Temperatur für das im oberen Teil des Boilers 1 befindliche Brühwasser zu ermöglichen.

Das aus dem Boiler 1 über den Brühwasserablauf 6 herausgedrückte Brühwasser wird je nach Anforderung an eine entsprechende Brüheinheit (nicht dargestellt) oder den Verdampfer 2 geleitet. Bei einer Anforderung von Milchschaum wird zunächst das Dampfrohr 14 des Verdampfers 2 über das Heizelement 16 auf seine Betriebstemperatur aufgeheizt. Das Aufheizen des Dampfrohres 14 auf seine Betriebstemperatur wird durch den Temperatursensor 19 überwacht. Nach Erreichen der Betriebstemperatur des Verdampfer 2 wird mittels der Pumpe eine kleine Menge Brühwasser bei Brühtemperatur von 92°C bis 94°C über die Brühwasserleitung 12 und den Brühwasserzulauf 13 dem Verdampfer 2 zugeführt. In dem Dampfrohr 14 wird das Brühwasser zunächst auf Siedetemperatur erwärmt, dann verdampft und schließlich überhitzt, um die für das Aufschäumen von Milch benötigte Dampftemperatur von 110°C bis 120°C bei 1 bis 2 bar bereitzustellen. Der überhitzte Dampf tritt am Dampfauslass 15 aus dem Dampfrohr 14 des Verdampfers 2 aus und wird über die Dampfleitung 20 zum Dampfanschluss 21 des Milchschäumers 3 geleitet. Der in den Milchschäumer 3 einströmende Wasserdampf saugt mittels des Venturi-Prinzips Milch über den Milchanschlussstutzen 22 an, mischt sich in dem Milchschäumer 3 mit der angesaugten Milch, erwärmt diese gleichzeitig und tritt an der Düse 23 als Milchschaum aus. Da für die Dampferzeugung nur ein relativ geringer Volumenstrom des Brühwassers notwendig ist, muss die Leistung der Pumpe, die üblicherweise auch beim Aufbrühen von Kaffee oder Tee große Mengen an Brühwasser fördern muss, gedrosselt oder getaktet angesteuert werden, um eine zu große Fördermenge zu vermeiden.

Nachdem eine vorgewählte Pumpenlaufzeit für die Zubereitung von Milchschaum beendet ist, wird das im Verdampfer 2 befindliche Restwasser noch vollständig verdampft, so dass nach Beendigung des Vorgangs ein im Wesentlichen trockenes Dampfrohr 14 vorhanden ist. Durch die geneigte Lage des Verdampfers 2 und die Anordnung des Brühwasserzulaufs 13 und des Dampfauslasses 15 auf der nach unten gerichteten Seite des Verdampfers 2 werden eventuell im Verdampfer 2 zurückbleibende Restwassermengen und entstehendes Kondensat durch die wirkende Schwerkraft aus dem abfallenden Bereichen des Dampfrohres 14 herausbefördert.

## Patentansprüche

1. Heißwassereinheit für einen Heißgetränkezubereiter mit einem Boiler (1) zum Bereitstellen von Brühwasser, der Boiler (1) weist einen Boilerzulauf (5), eine Boiler-Heizeinrichtung und einen Brühwasserablauf (6) auf, und mit einem Verdampfer (2) zum Bereitstellen von Dampf, der Verdampfer (2) weist einen Verdampferzulauf, eine Verdampfer-Heizeinrichtung (16) und einen Dampfauslass (15) auf, wobei der Boiler (1) und der Verdampfer (2) seriell angeordnet sind, der Verdampfer (2) als Durchlauferhitzer ausgebildet ist, der Verdampferzulauf als Brühwasserzulauf (13) ausgebildet ist, der an den Brühwasserablauf (6) des Boilers (1) angeschlossen ist, und der Verdampfer (2) zwischen dem Brühwasserzulauf (13) und dem Dampfauslass (15) ein Dampfrohr (14) aufweist,
**dadurch gekennzeichnet, dass** das Dampfrohr (14) geneigt gegenüber einer horizontalen Aufstellungsebene des Heißgetränkezubereiters angeordnet ist, wobei der Brühwasserzulauf (13) sowie der Dampfauslass (15) an der bezogen auf die Aufstellungsebene tiefsten Stelle der zugehörigen Dampfrohr-Abschnitte angeordnet sind.

2. Heißwassereinheit nach Anspruch 1,
**dadurch gekennzeichnet, dass** der Boiler (1) ein Boiler-Gehäuse (4) aufweist, wobei der Boilerzulauf (5) im unteren Bereich des Gehäuses (4) und der Brühwasserablauf (6) im oberen Bereich des Gehäuses (4) angeordnet sind.

3. Heißwassereinheit nach Anspruch 2,
**dadurch gekennzeichnet, dass** die Boiler-Heizeinrichtung als mehrstufige Heizwendel ausgebildet ist, die im Inneren des Boiler-Gehäuses (4) angeordnet ist.

4. Heißwassereinheit nach einem der Ansprüche 1 bis 3,
**dadurch gekennzeichnet, dass** der Heizkörper der Verdampfer-Heizeinrichtung (16) parallel zu dem Dampfrohr (14) angeordnet ist.

5. Heißwassereinheit nach einem der Ansprüche 1 bis 4,
**dadurch gekennzeichnet, dass** die Neigung des Dampfrohrs (14) gegenüber der horizontalen Aufstellungsebene größer als 5°, bevorzugt größer als 10°, ist.

6. Heißwassereinheit nach einem der Ansprüche 1 bis 5,
**dadurch gekennzeichnet, dass** die Neigung des Dampfrohrs (14) gegenüber der horizontalen Aufstellungsebene maximal 90°, aber kleiner als 45°, bevorzugt kleiner als 30°, ist.

7. Heißwassereinheit nach einem der Ansprüche 1 bis 6,
**dadurch gekennzeichnet, dass** der Brühwasserzulauf (13) und der Dampfauslass (15) des Durchlauferhitzers auf der gleichen Seite des Durchlauferhitzers angeordnet sind.

8. Heißwassereinheit nach Anspruch 7,
**dadurch gekennzeichnet, dass** das Dampfrohr (14) U-förmig ausgebildet ist.

9. Heißwassereinheit nach Anspruch 7,
**dadurch gekennzeichnet, dass** das Dampfrohr (14) als Kreisbogen ausgebildet ist.

10. Heißwassereinheit nach einem der Ansprüche 1 bis 9,
**dadurch gekennzeichnet, dass** zwischen dem Brühwasserablauf (6) und dem Brühwasserzulauf (13) eine Brühwasserleitung (12) vorgesehen ist und die Brühwasserleitung (12) als flexibler und temperaturbeständiger Schlauch ausgebildet ist.

11. Verwendung einer Heißwassereinheit nach einem der Ansprüche 1 bis 10 zum Anschluss an einen Milchschäumer (3),
**dadurch gekennzeichnet, dass** der Dampfauslass (15) der Heißwassereinheit mittels einer absperrfreien Dampfleitung (20) an den Milchschäumer (3) angeschlossen wird.

12. Verwendung einer Heißwassereinheit nach Anspruch 11,
**dadurch gekennzeichnet, dass** die Dampfleitung (20) als flexibler und temperaturbeständiger Schlauch ausgebildet ist.

13. Heißgetränkezubereiter, insbesondere eine Kaffeemaschine, mit einem Milchschäumer (3) und einer Heißwassereinheit nach einem der Ansprüche 1 bis 10,
**dadurch gekennzeichnet, dass** der Milchschäumer (3) absperrfrei mit dem Verdampfer (2) der Heißwassereinheit verbunden ist.

14. Heißgetränkezubereiter nach Anspruch 13,
**dadurch gekennzeichnet, dass** eine Pumpe vorgesehen ist, die Brühwasser aus dem Boiler (1) in den Verdampfer (2) fördert.

15. Heißgetränkezubereiter nach Anspruch 13 oder 14,
**dadurch gekennzeichnet, dass** eine Überlaufeinrichtung vorgesehen ist und die Überlaufeinrichtung im Boiler (1) oder zwischen Boiler (1) und Verdampfer (2) angeordnet ist.

## Claims

1. Hot water unit for a hot drinks maker with a boiler (1) for supplying brewing water, which boiler (1) has a boiler inlet (5), a boiler heating device and a brewing water outlet (6), and with an evaporator (2) for supplying steam, which evaporator (2) has an evaporator inlet, an evaporator heating device (16) and a steam outlet (15), the boiler (1) and the evaporator (2) being arranged in series, and the evaporator (2) is provided in the form of a continuous-flow heater, the evaporator inlet constitutes the brewing water inlet (13) which is connected to the brewing water outlet (6) of the boiler (1), and the evaporator (2) has a steam pipe (14) between the brewing water inlet (13) and the steam outlet (15),
**characterised in that** the steam pipe (14) is disposed at an angle relative to a horizontal standing plane on which the hot drinks maker stands, and the brewing water inlet (13) and the steam outlet (15) are disposed at the deepest point of the co-operating steam pipe portions by reference to the standing plane.

2. Hot water unit as claimed in claim 1,
**characterised in that** the boiler (1) has a boiler housing (4), and the boiler inlet (5) is disposed in the bottom region of the housing (4) and the brewing water outlet (6) is disposed in the top region of the housing (4).

3. Hot water unit as claimed in claim 2,
**characterised in that** the boiler heating unit is provided in the form of a multi-stage heating coil disposed in the interior of the boiler housing (4).

4. Hot water unit as claimed in one of claims 1 to 3,
**characterised in that** the heater of the evaporator heating unit (16) is disposed parallel with the steam pipe (14).

5. Hot water unit as claimed in one of claims 1 to 4,
**characterised in that** the inclination of the steam pipe (14) relative to the horizontal standing plane is greater than 5°, preferably greater than 10°.

6. Hot water unit as claimed in one of claims 1 to 5,
**characterised in that** the inclination of the steam pipe (14) relative to the horizontal standing plane is at most 90° but less than 45°, preferably less than 30°.

7. Hot water unit as claimed in one of claims 1 to 6,
**characterised in that** the brewing water inlet (13) and the steam outlet (15) of the continuous-flow heater are disposed on the same side of the continuous-flow heater.

8. Hot water unit as claimed in claim 7,
**characterised in that** the steam pipe (14) is of a U-shaped design.

9. Hot water unit as claimed in claim 7,
**characterised in that** the shape of the steam pipe (14) is that of a circular arc.

10. Hot water unit as claimed in one of claims 1 to 9,
**characterised in that** a brewing water pipe (12) is provided between the brewing water outlet (6) and the brewing water inlet (13) and the brewing water pipe (12) is provided in the form of a flexible and temperature-resistant hose.

11. Use of a hot water unit as claimed in one of claims 1 to 10 to provide a connection to a milk foamer (3),
**characterised in that** the steam outlet (15) of the hot water unit is connected to the milk foamer (3) by means of a steam pipe (20) which can not be shut off.

12. Use of a hot water unit as claimed in claim 11,
**characterised in that** the steam pipe (20) is provided in the form of a flexible and temperature-resistant hose.

13. Hot drinks maker, in particular a coffee machine, with a milk foamer (3) and a hot water unit as claimed in one of claims 1 to 10,
**characterised in that** the milk foamer (3) is connected to the evaporator (2) of the hot water unit so that it can not be shut off.

14. Hot drinks maker as claimed in claim 13,
**characterised in that** a pump is provided, which conveys the brewing water from the boiler (1) to the evaporator (2).

15. Hot drinks maker as claimed in claim 13 or 14,
**characterised in that** an overflow device is provided and the overflow device is disposed in the boiler (1) or between the boiler (1) and evaporator (2).

## Revendications

1. Unité d'eau chaude pour un appareil de préparation de boissons chaudes avec un dispositif de production d'eau chaude (1) pour préparer de l'eau bouillante, le dispositif (1) comportant une amenée de dispositif de production d'eau chaude (5), un dispositif de chauffage et une sortie d'eau bouillante (6), et avec un évaporateur (2) pour préparer de la vapeur, l'évaporateur (2) comportant une amenée d'évaporateur, un dispositif de chauffage (16) et une sortie de vapeur (15), étant précisé que le dispositif de production d'eau chaude (1) et l'évaporateur (2) sont disposés en série, que l'évaporateur (2) est conçu comme un chauffe-eau instantané, que l'amenée d'évaporateur est conçue comme une amenée d'eau bouillante (13) qui est raccordée à la sortie d'eau bouillante (6) du dispositif de production d'eau chaude (1), et que l'évaporateur (2) comporte entre l'amenée d'eau bouillante (13) et la sortie de vapeur (15) un tuyau de vapeur (14),
**caractérisée en ce que** le tuyau de vapeur (14) est incliné par rapport à un plan d'installation horizontal de l'appareil de préparation de boissons chaudes, l'amenée d'eau bouillante (13) et la sortie de vapeur (15) étant disposées à l'endroit des parties de tuyau de vapeur associées qui est le plus bas par rapport au plan d'installation.

2. Unité d'eau chaude selon la revendication 1, **caractérisée en ce que** le dispositif de production d'eau chaude (1) comporte un boîtier de dispositif de production d'eau chaude (4), l'amenée (5) du dispositif (1) étant disposée dans la zone inférieure du boîtier (4) et la sortie d'eau bouillante (6) étant disposée dans la zone supérieure du boîtier (4).

3. Unité d'eau chaude selon la revendication 2, **caractérisée en ce que** le dispositif de chauffage du dispositif de production d'eau chaude est conçu comme un enroulement chauffant à plusieurs niveaux qui est disposé à l'intérieur du boîtier (4).

4. Unité d'eau chaude selon l'une des revendications 1 à 3, **caractérisée en ce que** le corps chauffant du dispositif de chauffage d'évaporateur (16) est disposé parallèlement au tuyau de vapeur (14).

5. Unité d'eau chaude selon l'une des revendications 1 à 4, **caractérisée en ce que** l'inclinaison du tuyau de vapeur (14) par rapport au plan d'installation horizontal est supérieure à 5°, de préférence supérieure à 10°.

6. Unité d'eau chaude selon l'une des revendications 1 à 5, **caractérisée en ce que** l'inclinaison du tuyau de vapeur (14) par rapport au plan d'installation horizontal est au maximum de 90°, mais est inférieure à 45°, de préférence inférieure à 30°.

7. Unité d'eau chaude selon l'une des revendications 1 à 6, **caractérisée en ce que** l'amenée d'eau bouillante (13) et la sortie de vapeur (15) du chauffe-eau instantané sont disposées sur le même côté de ce dernier.

8. Unité d'eau chaude selon la revendication 7, **caractérisée en ce que** le tuyau de vapeur (14) a la forme d'un U.

9. Unité d'eau chaude selon la revendication 7, **caractérisée en ce que** le tuyau de vapeur (14) a la forme d'un arc de cercle.

10. Unité d'eau chaude selon l'une des revendications 1 à 9, **caractérisée en ce qu'**il est prévu une conduite d'eau bouillante (12) entre la sortie d'eau bouillante (6) et l'amenée d'eau bouillante (13), et la conduite d'eau bouillante (12) est conçue comme un tuyau flexible et résistant aux variations de température.

11. Utilisation d'une unité d'eau chaude selon l'une des revendications 1 à 10 à raccorder à un dispositif de production de mousse de lait (3), **caractérisée en ce que** la sortie de vapeur (15) de l'unité d'eau chaude est raccordée au dispositif de production de mousse de lait (3) à l'aide d'une conduite de vapeur sans organe d'arrêt (20).

12. Utilisation d'une unité d'eau chaude selon la revendication 11, **caractérisée en ce que** la conduite de vapeur (20) est conçue comme un tuyau flexible et résistant aux variations de température.

13. Appareil de préparation de boissons chaudes, en particulier machine à café, avec un dispositif de production de mousse de lait (3) et une unité d'eau chaude selon l'une des revendications 1 à 10,
**caractérisé en ce que** le dispositif de production de mousse de lait (3) est relié sans organe d'arrêt à l'évaporateur (2) de l'unité d'eau chaude.

14. Appareil de préparation de boissons chaudes selon la revendication 13, **caractérisé en ce qu'**il est prévu une pompe qui fait sortir l'eau bouillante du dispositif de production d'eau bouillante (1) pour la faire entrer dans l'évaporateur (2).

15. Appareil de préparation de boissons chaudes selon la revendication 13 ou 14, **caractérisé en ce qu'**il est prévu un trop-plein, et le trop-plein est disposé dans le dispositif de production d'eau bouillante (1) ou entre celui-ci et l'évaporateur (2).
